# EUROPEAN PATENT APPLICATION

(11) **EP 1 560 318 A1**
(43) Date of publication of application: **03.08.2005**
(21) Application number: 02807901.0
(22) Date of filing: 04.10.2002
(51) Int. Cl.: H02K 21/22, H02K 29/08, H02K 1/27, H02P 9/48

(54) **STARTING POWER GENERATION SYSTEM AND STARTING POWER GENERATOR**

(71) Applicant: Mitsuba Corporation, Kiryu-shi, Gunma 376-8555 (JP)
(72) Inventor: OOSUGI, Masahito, Oota-shi, Gunma 373-0815 (JP); HAYAMA, Keizo, Kiryu-shi, Gunma 376-0013 (JP)
(74) Representative: HOFFMANN - EITLE
(86) International application number: PCT/JP2002/010358
(87) International publication number: WO 2004/032312

(57) **Abstract**

In a starting power generation system having a starting power generator 1 functioning as a starter motor at an engine starting time and functioning as a generator after the engine is started, the starting power generator 1 includes a stator 3 having a stator core 14 formed with a plurality of projecting poles 16, a motor coil 21 wound around projecting pole 16m and used at a motor time and a single-phase power generating coil 22 wound around a projecting pole 16g different from that of the coil motor 21 and used at a power generation time. A rotor 2 connected to a crankshaft of the engine is arranged rotatably on the outside of the stator 3. A plurality of field magnets 4 are mounted on the rotor 2 along the circumferential direction. A motor driver is connected to the motor coil 21, and an open regulator is connected to the power generating coil 22.

## Description

### Technical Field

The present invention relates to a starting power generation system of an engine for a small-sized motorcycle, a general-purpose engine, etc. having a starting power generator functioning as a motor and a generator.

### Background Art

Since a motor and a generator are common in fundamental structure as a rotary electric machine, there exist many machines each used both as a motor and a generator. For example, in a small-sized motorcycle, an engine generator, etc., a starting power generator of a starting and power generating machine used both as a starter motor for starting an engine and a generator for generating power driven by the engine is frequently used. Such a starting power generator forms a starting power generation system which includes a driver for driving a motor and a regulator for controlling a power generation, and its operation is controlled by a CPU provided for controlling the engine, etc.

However, in such a starting power generation system, when the starting power generator uses a coil for both as a motor and a generator, there arises a problem that a balance of performances when functioning as a motor (hereinafter referred to as a motor time) and as a generator (hereinafter referred to as a power generation time) is hardly taken. There is a difference between the performances as the motor for starting the engine and as the generator driven by the engine for charging a battery, and it is very difficult to allow the common coil to be compatible in a high level. In the starting power generation system, it is a first preposition to start the engine, and thus, it is inevitable to design the system, placing great importance on the motor performance. Therefore, in the starting power generation system, the performance of the starting power generator as the generator is sacrificed, and there arises a problem that a desired power generation performance cannot be obtained.

In the design placing great importance on a motor output, in order to reduce an inductance, a winding is formed by winding a thick coil by less number of turns. However, in case of the winding having a small inductance, a rise of a power generation output in a low engine speed range (low rotation range) is slow, and hence the output is suppressed to be low. In addition, in a high-speed range (high rotation range), there arises a problem that the suppression of the power generation output is not effected, and the output becomes excessively high. The insufficient power generation in the low-speed range brings about battery consumption at an idling time, and an excessive power generation in the high-speed range gives rise to low fuel efficiency due to an increase in engine friction.

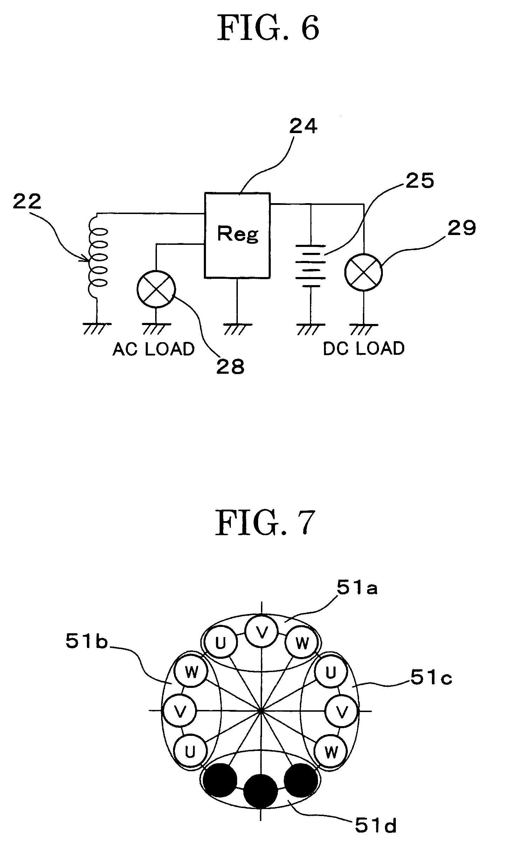

Therefore, in order to eliminate such problems, it has been proposed to take a balance of characteristics of the motor and the power generation by dividing a coil into coils for the motor and the power generation, setting them and suitably switching the coils for the motor and the power generation. FIG. 7 is an explanatory view showing a winding structure of a starting power generator in which coils are set according to functions of both the motor and the power generation as described above. In the starting power generator which is wired as shown in FIG. 7, coils 51a to 51d are all used at the motor time to secure an output, and only the coil 51d is used at the power generation time to generate power. That is, at the power generation time, only the coil 51d colored in black functions, and the other coils 51a to 51c pause.

In such a stating power generator, as shown in FIG. 7, in case of a three-phase brushless motor, it is general that the power-generating coil is wired in three phases similarly to the motor coils. That is, the coils 51a to 51d are all put in three-phase wiring connection in the shape of, for example, star, driven by a three-phase motor driver, and a three-phase regulator is disposed at a rear stage of the power generating coil. A battery is charged by an electromotive force of the coil 51d. When the battery is fully charged, a short-circuit of the regulator is controlled, and the electromotive force is conducted appropriately to a ground.

However, in the starting power generation system having such a starting power generator, when the motor is, for example, a three-phase brushless motor, the power generating coil is wired in three phases similarly to the motor coils. Therefore, a regulator for three-phase is required at the rear stage of the power generating coil, and hence the system becomes costly. Furthermore, a CPU for controlling the three-phase motor driver and the three-phase regulator must control a FET, a thyristor, etc. complicatedly and precisely, requires a high processing capability, and as a result, a system cost increases at this point. Particularly, a three-phase motor driver having a regulator function is very expensive, and its improvement is desired. In addition, in a conventional starting power generation system, it has a structure that, when a battery is fully charged, a short-circuit of the regulator is controlled, an energy loss arises there, and it becomes engine friction.

An object of the present invention is to provide a starting power generation system which has a starting power generator functioning as a motor and a generator and in which a balance between a motor performance and a power generating performance is improved, and a control circuit is simplified to reduce its cost.

### Disclosure of the Invention

A starting power generation system according to the present invention has a starting power generator functioning as a starter motor at an engine starting time and functioning as a generator after the engine is started, the system characterized by comprising: a stator having a stator core formed with a plurality of projecting poles, motor coils wound around the projecting poles and used when the starting power generator functions as a motor, and single-phase power generating coils wound around the projecting poles different from those of the motor coils and used when the starting power generator functions as a generator; a rotor connected to a crankshaft of the engine and arranged rotatably at an outside or inside of the stator and having a plurality of permanent magnets mounted along the circumferential direction; a motor driver connected to the motor coils to excite the motor coils based on the position of the rotor and to form a rotary magnetic field around the stator; and a regulator connected to the power generating coils to control the output from the power generating coils.

According to the present invention, the winding of the starting power generator is divided into motor coils and power generating coils, which are made independent, and thereby providing optimum winding specifications to both the motor coils and the power generating coils. Therefore, the power generating coils can be allowed to be a fine wiring multiple winding specifications, and hence a power generation output improvement at a low speed time and a power generation suppressing at a high-speed time can be intended. In addition, since the power generating coils are single phase, a low-cost single-phase regulator can be adopted for power generation, and further an open control can be performed. Therefore, a system cost can be reduced, and a low friction can be realized by a power generation suppression and an open control at the high speed time, and a fuel consumption can also be improved.

In the above-mentioned starting power generation system, a disposition interval of the projecting poles wound with the power generating coils is set to a value of an integral multiple of X or a value obtained by dividing the X by an integer with X = 360°/N as a reference to the number N of the permanent magnets. Therefore, all the projecting poles around which the power generating coils are wound are constantly opposed to the permanent magnets in the same phase, and a smooth single phase output can be obtained from the power generating coils.

Also, in the starting power generation system, the motor coils have a plurality of sets of motor coil groups made of windings of the respective phases, and the power generating coils are disposed between the motor coil groups. In this case, the power generating coils can be constructed by one set of power generating coil group by a plurality of the projecting poles disposed adjacently.

Furthermore, in the starting power generation system, an interval of the projecting poles wound with the power generating coils may be set to a value different from the interval of the projecting poles wound with the motor coils. In this case, an interval of the projecting poles around which the power generating coils are wound can be set wider than the interval between the projecting poles around which the motor coils are wound. Thus, the number of turns of the power generating coils can be increased more than the motor coils, and power generation characteristics due to the increase in inductance are improved.

In addition, in the starting power generation system, the regulator may be an open regulator. Thus, an energy loss at a fully charged time can be avoided, and a low friction can be realized.

On the other hand, the starting power generator of the present invention functions as a starter motor at an engine starting time and functions as a generator after the engine is started. The generator comprises: a stator having a stator core formed with a plurality of projecting poles, motor coils wound around the projecting poles and used when the starting power generator is used as a motor, and single-phase power generating coils wound around the projecting poles different from those of the motor coils and used when the starting power generator functions as a generator; and a rotor connected to a crankshaft of the engine, arranged rotatably at an outside or inside of the stator and having a plurality of permanent magnets mounted along the circumferential direction.

According to the present invention, since the windings of the starting power generator are divided into the motor coils and the power generating coils independently, the respective coils may be set to optimum winding specification. Therefore, the power generating coils can be set to a fine wiring multiple winding specification, thereby achieving the improvement in power generation output at a low speed time as well as power generation suppression at a high speed time. Further, since the power generating coils are single phase, a low cost single-phase regulator connected to the starting power generator can be adopted for power generation and further an open control can be performed. Therefore, a cost of the system including the starting power generator can be reduced, the low friction can be realized by the power generation suppression at the high speed time and the open control, thereby improving a fuel efficiency.

In the starting power generator, a disposition interval of the projecting poles wound with the power generating coils is set to a value of an integral multiple of X or a value obtained by dividing the X by an integer with X = 360°/N as a reference to the number N of the permanent magnets. Thus, all the projecting poles around which the power generating coils are wound, are constantly opposed to the permanent magnets in the same phase, and smooth single phase output can be obtained from the power generating coils.

In the starting power generator, the motor coils have a plurality of sets of motor coil groups made of windings of the respective phases, and the power generating coils are disposed between the motor coil groups. Incidentally, in this case, the power generating coils can be constructed by one set of a power generating coil group by a plurality of the projecting poles disposed adjacently.

Furthermore, in the starting power generator, the interval of the projecting poles wound with the power generating coils may be set to a value different from the interval of the projecting poles wound with the motor coils. Thus, the interval between the projecting poles around which the power generating coils are wound, can be set wider than that between the projecting poles around which the motor coils are wound. The number of turns of the power generating coils is larger than the motor coils, and power generation characteristics due to an increase in inductance can be improved.

### Brief Description of the Drawings

FIG. 1 is a sectional view showing a structure of a starting power generator used for a starting power generation system of a first embodiment of the present invention;
FIG. 2 is an explanatory view showing the structures of a rotor and a stator of the starting power generator of FIG. 1 as viewed from an axial direction;
FIG. 3 is an explanatory view showing a circuit configuration in the starting power generator of FIG. 1;
FIG. 4 is an explanatory view showing an example of a coil disposition when four sets of three-phase motor coils are disposed;
FIG. 5 is an explanatory view showing one example of a coil disposition when projecting poles are provided equally intervals and motor coils and power generating coils are disposed dispersively;
FIG. 6 is an explanatory view showing a circuit configuration concerning a power generating coil when a total tap lighting system is adopted; and
FIG. 7 is an explanatory view showing a winding structure of a conventional starting power generator.

### Best Mode for Carrying Out the Invention

### (First Embodiment)

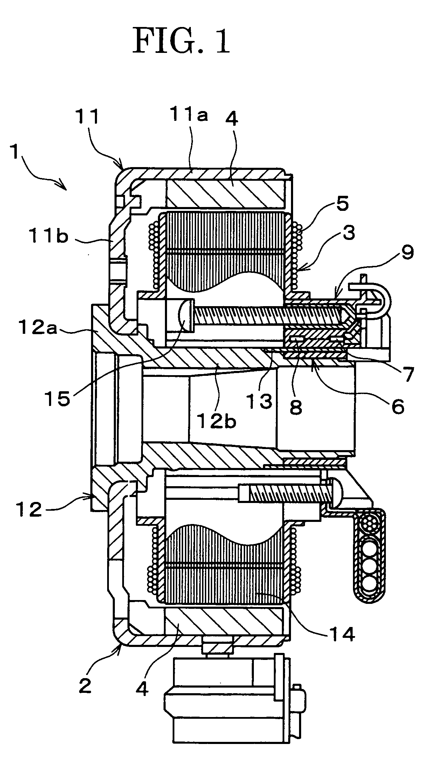

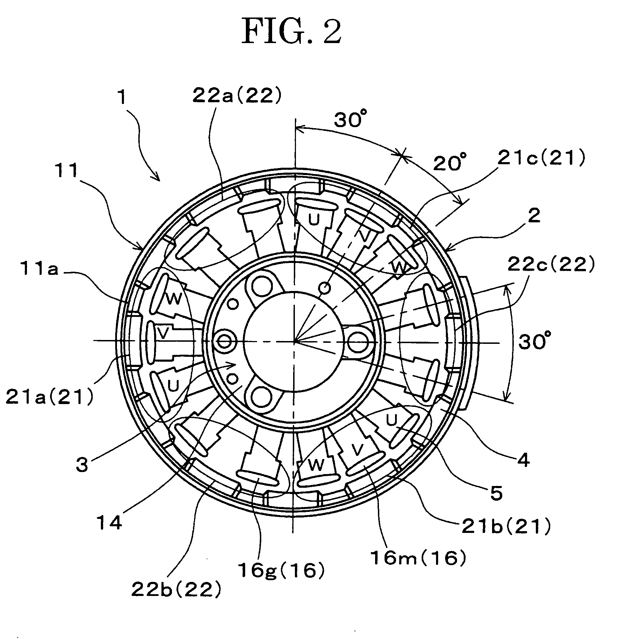

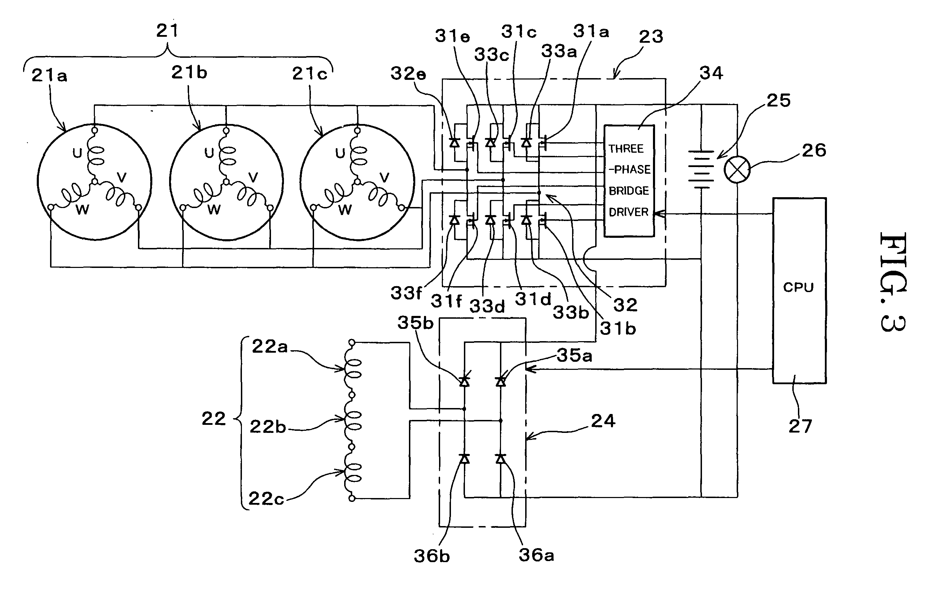

An embodiment of the present invention will further be described in detail below with reference to the accompanying drawings. FIG. 1 is a sectional view showing a structure of a starting power generator used for a starting power generation system of a first embodiment of the present invention. FIG. 2 is an explanatory view showing the structures of a rotor and a stator of the starting power generator of FIG. 1 as viewed from an axial direction. FIG. 3 is an explanatory view showing a circuit configuration in the starting power generator of FIG. 1.

The starting power generator 1 of FIG. 1 is an outer rotor type rotary electric machine used both as a brushless motor and a power generator, and is used as an ACG (alternating current generator) starter in a motorcycle. The starting power generator 1 includes a rotor 2 and a stator 3 when roughly dividing. A field magnet 4 is mounted on the rotor 2 and a winding 5 is mounted on the stator 3. A sensor unit 8 having a Hall IC 7 is fixed to the stator 3 by a screw 15. The Hall IC 7 is disposed at the outside of the sensor magnet 6 to output a sensor signal in association with a pole change of the sensor magnet 6.

The rotor 2 is mounted on a crankshaft (not shown) of the engine. The rotor 2 is disposed rotatably at the outside of the stator 3 to function as a flywheel. The rotor 2 has a closed-bottom cylindrical rotor yoke 11, and a boss rotor 12 mounted on the rotor yoke 11 and fixed to the crankshaft. The rotor yoke 11 and the boss rotor 12 are formed together by a magnetic material, such as an iron, etc. A plurality of field magnets 4 are arranged along the circumferential direction on the inner peripheral surface of the cylindrical portion 11a of the rotor yoke 11. Here, twelve field magnets 4 are arranged at a pitch of 30° so that the polarities of the inner surface side alternately become N-poles and S-poles.

The boss rotor 12 has a disk-like flange portion 12a and a substantially cylindrical boss portion 12b. The flange portion 12a is mounted concentrically on the bottom 11b of the rotor yoke 11. The boss portion 12b is projected from the flange portion 12a along a rotation central line, and taper-coupled to the crankshaft. When the crankshaft is rotated, the boss portion 12b is rotated together, and the rotor 2 is rotated at the outside of the winding 5. The cylindrical sensor magnet 6 is mounted at the distal end of the boss portion 12b. The sensor magnet 6 is magnetized to the same number of the polarities (12 poles) corresponding to the poles of the field magnets 4. A magnet cover 13 is mounted on the outer periphery of the sensor magnet 6.

The stator 3 has a stator core 14 formed by laminating a plurality of steel sheets. As shown in FIG. 2, a plurality of projecting poles 16 are formed on the stator core 14, and the winding 5 is wound around the projecting poles 16. The winding 5 is divided into a motor coil 21 and a power generating coil 22. The motor coil 21 has three sets of motor coil groups 21a to 21c (hereinafter abbreviated "coil groups 21a to 21c"), and the respective coil groups 21a to 21c are disposed equally at an interval of 120°. Three projecting poles 16m for the motor coils are disposed adjacently in the coil groups 21a to 21c. Three-phase motor coils of U, V and W are respectively wound around the projecting poles 16m. The projecting poles 16m are set at an interval of 20° similarly to the stator of the 18-pole structure, and nine poles of a half of 18 poles form three sets of motor coil groups 21a to 21c at each three poles.

The power generating coils 22 has three sets of power generating coil groups 22a to 22c (hereinafter abbreviated "power generating coil groups 22a to 22c), and the respective coil groups 22a to 22c are disposed equally at an interval of 120°. Two projecting poles 16g for the power generating coils are disposed adjacently in the power generating coil groups 22a to 22c, and the power generating coils are wound around the poles. Three sets of two projecting poles 16g, totally six poles are disposed in a residual space in which the nine projecting poles 16m are disposed. That is, the two projecting poles 16g are disposed in the space for three poles. An angle between the projecting poles 16g in the power generating coil groups 22a to 22c is set to 30°, and all the projecting poles 16g are always opposed in the same phase to the field magnets 4. Therefore, electromotive forces of the same phase are generated in the three sets of the power generating coil groups 22a to 22c, and a single-phase power generation is performed in the power generating coil 22.

Since the two projecting poles 16g are disposed in the space for three poles as described above, the interval (30°) is larger than the interval (20°) of the projecting poles 16m. That is, the distance between the projecting poles 16g is larger than that of the projecting poles 16m. Therefore, the projecting poles 16g can be wound with more coils than the projecting poles 16m. Furthermore, since the power generating coil 22 is independent from the motor coil 21, a diameter of the coil can be set for the power generation. That is, a coil having a finer diameter than the motor coil 21 can be wound around the projecting pole 16g to form the power generating coil 22.

Accordingly, an inductance of the power generating coil 22 can be set large to obtain a power generation output from an engine low-speed range. Therefore, a power generation performance in the low speed rotation range is improved, and insufficiency of a charging capability at an idling time, etc. can be eliminated. Furthermore, in an engine high-speed range, a power generation output is suppressed, and engine friction due to an excessive power generation in the high-speed range is reduced so that fuel consumption can be improved.

On the other hand, the motor coil groups 21a to 21c are constructed, as shown in FIG. 3, to wire three-phase windings U, V and W in a star-like shape, and the respective coil groups 21a to 21c are connected in parallel with each other. On the contrary, the power generating coil groups 22a to 22c are wired in such a manner that the coils wound around adjacent projecting poles 16g are wired in series with each other in the groups, and the respective groups are wired in series with each other. Also, the motor coil 21 is connected to a motor driver 23, and the power generating coil 22 is connected to an open regulator 24. The motor driver 23 and the open regulator 24 are connected to a battery 25, and a load 26 such as a stop lamp, etc., is connected to the battery 25. These systems are controlled by a CPU 27, and the motor driver 23 and the open regulator 24 are operated based on a command from the CPU 27.

The motor driver 23 has an inverter 32 made of a bridge circuit formed by using FETs 31a to 31f. The inverter 32 has an energization control function for supplying current to form a rotary magnetic field based on the detected result of the Hall IC 7 to the coil groups 21a to 21c, and has six field effect transistor FETs 31a to 31f, and six parasitic diodes 33a to 33f connected in parallel with the field effect transistors FETs 31a to 31f.

In the inverter 32, the FETs 31a, 31c, and 31e of High side, and the FETs 31b, 31d and 31f of Low side of three bridge rows are connected in series with each other. In this case, the FETs 31a, 31c and 31e are connected to a + side of the battery 25, and the FETs 31b, 31d and 31f are connected to a - side of the battery 25 commonly. The respective phases of the coil groups 21a to 21c are connected to the connecting nodes of the FETs 31a, 31c and 31e and the FETs 31b, 31d and 31f of the respective bridge rows. That is, a U-phase coil is connected between the FETs 31a and 31b, a V phase coil is connected between the FETs 31c and 31d, and a W-phase coil is connected between the FETs 31e and 31f. Also, gates of the FETS 31a to 31f are connected to a three-phase bridge driver 34.

The open regulator 24 includes thyristors 35a, 35b, and diodes 36a, 36b. The power generating coil 22 is connected between the thyristor 35a and the diode 36a, and between the thyristor 35b and the diode 36b. The thyristors 35a and 35b are controlled by the CPU 27, and are switched suitably in response to the direction of an electromotive force of the power generating coil 22. Also, the voltage of the battery 25 is monitored in the CPU 27. When the battery 25 is fully charged, the thyristors 35a and 35b are turned OFF concurrently. Thus, the power generating coil 22 becomes an open state, and the charging operation of the battery 25 is stopped.

Since the power generating coil 22 is a single phase, the open regulator 24 can correspond with the above-mentioned simple structure, and commercially available general purpose components can be applied. Therefore, an expensive three-phase regulator is not required, and hence an inexpensive system can be constructed by adopting a low-cost regulator.

In such a starting power generation system, when a starter switch of a motorcycle is turned ON, the CPU 27 supplies a current to the motor coil 21, and the starting power generator 1 functions as the motor. The CPU 27 controls the motor driver 23 based on a sensor signal from the Hall IC 7, turns suitably ON/OFF the FETs 31a to 31f, thereby energizes the motor coil 21 to form a rotary magnetic field around the rotor 2. Thus, the rotor 2 is rotatably driven to start the engine.

When the engine is started and the starter switch is turned OFF, the rotor 2 is rotated by the engine, and the starting power generator 1 functions as a generator. That is, when the rotor 2 is rotated around the stator 3, the magnetic field of the field magnet 4 crosses the power generating coil 22 to generate an electromotive force, thereby starting the power generation. At this time, the CPU 27 controls the open regulator 24, thereby charging the battery 25. If the battery 25 becomes a full charged state, as described above, the CPU 27 turns OFF the thyristors 35a and 35b concurrently. At this time, since the power generating coil 22 becomes an open state, a power generation action does not occur differing from the case of a short circuit control, and hence a power is not wastefully discharged. Therefore, an energy loss is eliminated, and engine friction can be remarkably reduced in association with elimination of excessive power generation in the above-mentioned high-speed range. Therefore, fuel consumption can be remarkably improved.

In the starting power generation system of the present invention as described above, the winding 5 is divided into the motor coil 21 and the power generating coil 22, and therefore, the respective coils can be optimum winding specifications. That is, while the motor coil 21 is designed to be thick with little number of turns placing great importance on the motor performance, the power generating coil 22 can be designed to be thin with multiple number of turns, thereby achieving improvement in power generation output at a low speed as well as suppression in a power generation at a high speed time. Further, since the single-phase power generating coil 22 is provided while the three-phase motor coil 21 is incorporated, an inexpensive single-phase regulator can be adopted for the power generation and further an open control can be performed. Therefore, a system cost can be reduced, and a low friction can be realized by the power generation suppressing at the high-speed time and the open control, thereby improving fuel consumption.

### (Second Embodiment)

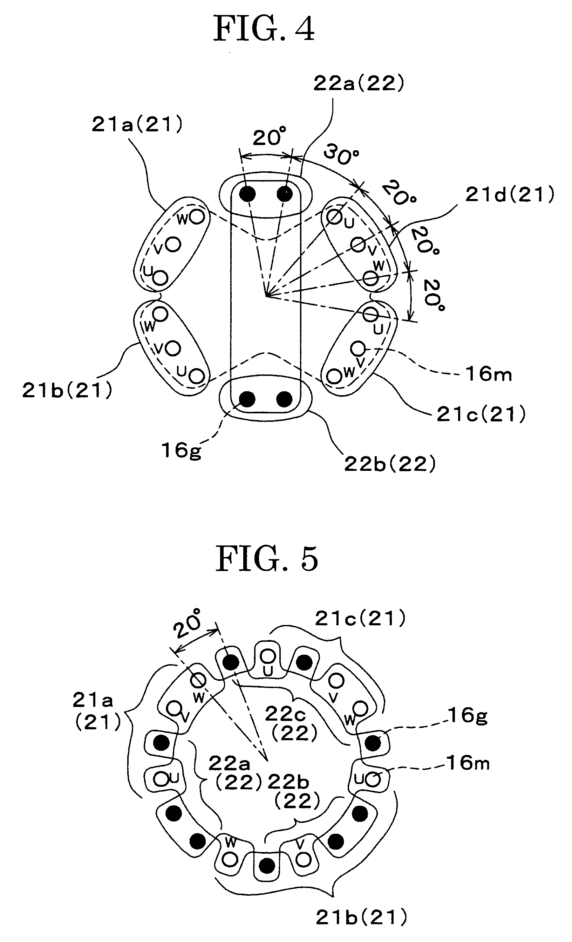

Then, as a second embodiment, an example in which the number of sets of coils is different in the three-phase starting power generator similar to that of the first embodiment will be shown. FIG. 4 is an explanatory view showing one example of a coil disposition when four sets of the three-phase motor coils are disposed.

In the starting power generator of FIG. 4, four sets of three-phase motor coils 21 and two sets of single-phase power generating coils 22 are provided. The motor coils 21 include motor coil groups 21a to 21d, and the power generating coils 22 include power generation coil groups 22a and 22b. The coil groups 21a and 21b are disposed at a left side in FIG. 4, the coil groups 21c and 21d are disposed at a right side in FIG. 4, and power generating coil groups 22a and 22b are disposed between both the groups.

In the coil groups 21a to 21d, the projecting poles 16m are also set at an interval of 20°, and the twelve poles of eighteen poles form four sets of motor coil groups 21a to 21d at each three poles. The coil groups 22a and 22b are disposed at an interval of 180°, and the projecting poles 16g are disposed at two sets of two poles, totally four poles in a residual space in which the projecting poles 16m are disposed at twelve poles. An angle between the projecting poles 16g in the coil groups 22a and 22b is set to 20°, and an interval of 30° is provided between the adjacently disposed projecting poles 16g and the projecting poles 16m. In this case, in order to obtain a single-phase output from the power generating coil 22, the eighteen field magnets 4 are disposed at a pitch of 20°, to constantly oppose all the projecting poles 16g to the field magnets 4 in the same phase.

### (Third Embodiment)

Furthermore, as a third embodiment, an example in which the projecting poles 16 are disposed equally in a three-phase starting power generator similar to that of the first embodiment and the motor coils 21 and the power generating coils 22 are disposed dispersively, is shown. FIG. 5 is an explanatory view showing one example of a coil disposition of this case.

In the starting power generator of FIG. 5, three sets of three-phase motor coils 21 and three sets of single-phase power generating coils 22 are provided similarly to the first embodiment. Here, the eighteen projecting poles 16 (16m, 16g) are provided equally at an interval of 20°. The motor coils 21 include motor coil groups 21a to 21c, and the power generating coils 22 include power generating coil groups 22a to 22c. The coil groups 21a and 21c are separated between U phase and V and W phases, and the coil group 21b is disposed separately in the U, V and W phases. In the coil groups 22a and 22b, one of the three poles is separated, and in the coil group 22c, all three poles are disposed separately. The respective coil groups are disposed dispersively as shown in FIG. 5 by disposing separated one pole of the coil group 22a between the U phase and the V phase of the coil group 21a.

### (Fourth Embodiment)

In addition, as a fourth embodiment, an example in which total tap lighting system is adopted in a three-phase starting power generation similar to that of the first embodiment, is shown. FIG. 6 is an explanatory view showing a circuit configuration concerning a power generating coil in this case.

Here, as shown in FIG. 6, an AC load 28 is arranged between an open regulator 24 and a ground. As the AC load 28, for example, there is provided the one that lights while the engine is working but goes out when the engine stops, like a headlight, etc. A DC load 29 is connected in parallel with the battery 25, at the rear stage of the open regulator 24. As the DC load 29, for example, there is provided the one that lights irrespective of the actuation of the engine, like a stop lamp, etc. In this system according to the present invention, since the power generating coil 22 outputs a single-phase alternating current, it is possible to connect the loads by adopting such a so-called total tap lighting system and the degree of freedom in the design of electrical equipment can be improved.

The present invention is not limited to the above-mentioned embodiments, but various modifications may be made without departing from the spirit or scope of the present invention.

For example, the present invention can be applied to other starting power generation system other than a motorcycle, such as a general purpose engine, etc. In the above-mentioned embodiments, the example of the outer rotor type brushless motor is shown, but the present invention can be applied to a starting power generator of a so-called inner rotor type brushless motor in which a rotor is disposed at the inside of a stator.

In the above-mentioned embodiment, the example in which the present invention is applied to the three-phase motor is shown. However, an object to which the present invention is applied is not limited to these, and the invention can be applied to a polyphase motor, such as a five-phase motor. Furthermore, the number of the projecting poles 16, or field magnets 4, the number of coil groups, etc., are not limited to the above-mentioned examples.

According to the starting power generation system of the present invention, since the winding of the starting power generator is divided into the motor coil and the power generating coil independently, the respective coils may be made to optimum winding specifications. Therefore, the power generating coil can be made a fine wiring multiple winding specification, and improvement in a power generation output at a low speed time and power generation suppressing at a high speed time can be performed. Further, since the power generating coil is a single phase, an inexpensive single-phase regulator can be adopted for power generation, and further, an open control can be conducted. Therefore, a system cost can be reduced, and a low friction can be realized by the power generation suppressing at the high-speed time and the open control, thereby improving fuel consumption.

Furthermore, according to the starting power generator of the present invention, the winding is divided into the motor coil and the power generating coil independently, and hence the respective coils may be made optimum winding specification. Therefore, the power generating coil can be made the fine wiring multiple winding specification and the improvement in the power generation output at the low speed time and the power generation suppressing at the high speed time can be performed. Further, since the power generating coil is a single phase, an inexpensive single-phase regulator can be adopted for the power generation connected to the rear stage of the starting power generator, and further the open control can be conducted. Therefore, the cost of the system including the starting power generator can be reduced, and the low friction can be realized by the power generation suppressing at the high speed time and the open control, thereby improving fuel consumption.

## Claims

1. A starting power generation system having a starting power generator functioning as a starter motor at an engine starting time and functioning as a generator after the engine is started, **characterized by** comprising:
a stator having a stator core formed with a plurality of projecting poles, motor coils wound around the projecting poles and used when the starting power generator functions as a motor, and single-phase power generating coils wound around the projecting poles different from those of the motor coils and used when the starting power generator functions as a generator;
a rotor connected to a crankshaft of the engine and arranged rotatably at an outside or inside of the stator and having a plurality of permanent magnets mounted along the circumferential direction;
a motor driver connected to the motor coils to excite the motor coils based on the position of the rotor and to form a rotary magnetic field around the stator; and
a regulator connected to the power generating coils to control the output from the power generating coils.

2. The starting power generation system according to claim 1, **characterized in that** a disposition interval of the projecting poles wound with the power generating coils is set to a value of an integral multiple of X or a value obtained by dividing the X by an integer with X = 360°/N as a reference to the number N of the permanent magnets.

3. The starting power generation system according to claim 1 or 2, **characterized in that** the motor coils have a plurality of sets of motor coil groups made of windings of the respective phases, and the power generating coils are disposed between the motor coil groups.

4. The starting power generation system according to claim 3, **characterized in that** the power generating coils form one set of power generating coil group by a plurality of the adjacently disposed projecting poles.

5. The starting power generation system according to any of claims 1 to 4, **characterized in that** an interval of the projecting poles wound with the power generating coils is set to a value different from the interval of the projecting poles wound with the motor coils.

6. The starting power generation system according to claim 5, **characterized in that** an interval of the projecting poles wound with the power generating coils is set wider than the interval between the projecting poles wound with the motor coils.

7. The starting power generation system according to any of claims 1 to 6, wherein the regulator is an open regulator.

8. A starting power generator functioning as a starter motor at an engine starting time and functioning as a generator after the engine is started, **characterized by** comprising:
a stator having a stator core formed with a plurality of projecting poles, motor coils wound around the projecting poles and used when the starting power generator functions as a motor, and single-phase power generating coils wound around the projecting pole different from those of the motor coils and used when the starting power generator functions as a generator; and
a rotor connected to a crankshaft of the engine and arranged rotatably at an outside or inside of the stator and having a plurality of permanent magnets mounted along the circumferential direction.

9. The starting power generator according to the Claim 8, **characterized in that** a disposition interval of the projecting poles wound with the power generating coils is set to a value of an integral multiple of X or a value obtained by dividing the X by an integer with X = 360°/N as a reference to the number N of the permanent magnets.

10. The starting power generator according to claim 8 or 9, **characterized in that** the motor coils have a plurality of sets of motor coil groups made of windings of the respective phases, and the power generating coils is disposed between the motor coil groups.

11. The starting power generator according to any of the claims 8 to 10, **characterized in that** an interval of the projecting poles wound with the power generating coils is set to a value different from the interval between the projecting poles wound with the motor coils.
